# EUROPEAN PATENT APPLICATION

(11) **EP 4 421 315 A1**
(43) Date of publication of application: **28.08.2024**
(21) Application number: 23158231.3
(22) Date of filing: 23.02.2023
(51) Int. Cl.: F03D 9/19, F03D 13/25, F03D 9/17, F03D 9/28, C25B 1/04, C25B 15/00, C25B 9/67, C25B 15/08

(54) **OFFSHORE WIND TURBINE AND METHOD FOR OPERATING AN OFFSHORE WIND TURBINE**

(71) Applicant: Siemens Gamesa Renewable Energy A/S, 7330 Brande (DK)
(72) Inventor: Kalogirou, Andromachi, 8000 Aarhus (DK); Vijayakumar, Diwakar Memangalam, 7100 Vejle (DK)
(74) Representative: SGRE-Association

(57) **Abstract**

An offshore wind turbine (1), comprising:
a hydrogen production apparatus (10) for converting water (W) into hydrogen (H),
a water-intake apparatus (15) comprising a first and second pump (24, 25) for pumping water (W) from the sea (16) to the hydrogen production apparatus with a predetermined desired total pumping capacity (P_{d}), the first and second pumps having first and second current pumping capacities (P_{c1}, P_{c2}), respectively, and
a control device (26) for controlling the first and second pumps such that:
both the first and second current pumping capacities are non-zero and their sum is equal to or larger than the desired total pumping capacity, and/or
the first and second pumps alternatingly deliver the predetermined desired total pumping capacity.

By having the two pumps and avoiding long idle times of the pumps, the availability of the water-intake apparatus is increased.

## Description

The present invention relates to an offshore wind turbine and a method for operating an offshore wind turbine.

Hydrogen gas produced from renewable energies such as wind power provides a so-called green hydrogen that can replace fossil fuels. For example, green hydrogen gas can be used in fuel cell vehicles.

Offshore wind turbines which include their own hydrogen production device on an outside platform are known from the literature, as disclosed, for instance, in EP 4067534 A1. Hence, these wind turbines can produce and deliver electrical energy as well as hydrogen gas. A hydrogen production device of such an offshore wind turbine typically comprises an electrolysis unit which converts water (e.g., seawater) into hydrogen by means of electrical energy generated by the wind turbine.

It is one object of the present invention to provide an improved offshore wind turbine and an improved method for operating an offshore wind turbine.

Accordingly, an offshore wind turbine is provided. The offshore wind turbine comprises:
a generator for generating electrical power from wind power,
a hydrogen production apparatus for converting water into hydrogen by means of the generated electrical power,
a water-intake apparatus comprising a first and a second pump for taking in water from the sea and/or an open water reservoir and pumping the water to the hydrogen production apparatus with a predetermined desired total pumping capacity, the first and second pumps having first and second rated pumping capacities and first and second current pumping capacities, respectively, and both the first and second rated pumping capacities being equal to or larger than the desired total pumping capacity, and
a control device for controlling the first and second pumps such that:
   both the first and second current pumping capacities are non-zero and their sum is equal to or larger than the desired total pumping capacity, and/or
   the first and second pumps alternatingly deliver the predetermined desired total pumping capacity.

Thus, a water-intake apparatus with at least two pumps (i.e. the first and second pumps) for pumping water from the sea and/or the open water reservoir to the hydrogen production apparatus is provided. Since each pump has a pumping capacity that is equal to or larger than the desired total pumping capacity required by the hydrogen production apparatus, each pump alone can deliver the desired total pumping capacity. Hence, in case that one of the first and second pumps fails, the other one can overtake operation. Therefore, it can be ensured that the water-intake apparatus is working even when one of the two pumps fails.

Furthermore, the first and second pumps are controlled such that none of them is idle for a long time. In a first operational mode, none of the first and second pumps has an idle time at all. In a second operational mode, the first and second pumps swap the role of the active pump frequently such that idle times are short. Avoiding and/or shortening idle times of the pumps reduces the risk of mechanical failures of the pumps. Amongst others, for example the build-up of fouling due to microorganisms in the water (e.g., seawater) is reduced and/or avoided. Hence, the availability of the water-intake apparatus is increased.

In particular, in the first operational mode, both the first and second pumps are operating and pumping water simultaneously such that the sum of the first and second pumping capacities is equal to or larger than the desired total pumping capacity. In other words, the first and second pumps deliver together the predetermined desired total pumping capacity. Hence, the desired total pumping capacity required by the hydrogen production apparatus is distributed between the first and second pumps.

For example, the pumping load may be split evenly between the first and second pumps such that each of the first and second pumps delivers 50% of the desired total pumping capacity required by the hydrogen production apparatus. However, the desired total pumping capacity required by the hydrogen production apparatus may also be distributed in the first operational mode unevenly between the first and second pumps. For example, the first pump may deliver 60% and the second pump 40% of the desired total pumping capacity. Further, the first pump may, for example, deliver 70% and the second pump 30% of the desired total pumping capacity. Further, the first pump may, for example, deliver 80% and the second pump 20% of the desired total pumping capacity. Further, the first pump may, for example, deliver 90% and the second pump 10% of the desired total pumping capacity.

Furthermore, the sum of the first and second current pumping capacities may also be larger than the desired total pumping capacity. For example, both the first and the second pumps may deliver 60% of the desired total pumping capacity. Hence, the sum of the first and second current pumping capacities may exceed 100% of the desired total pumping capacity. This may be of advantage in a case in which one or both pumps is/are not capable of delivering less than a minimum pumping capacity (e.g., 60% of the desired total pumping capacity in the above example). The amount of water pumped in excess of 100% of the desired total pumping capacity (e.g., 10% for each of the first and second pumps in the above example) may be not delivered to the hydrogen production apparatus but returned into the sea and/or open water reservoir.

In the second operational mode, the first and second pumps alternatingly deliver the predetermined desired total pumping capacity. In other words, the first and second pumps swap frequently which one is operating to deliver the desired total pumping capacity and which one is idle for a short time. For example, in a first time period, the current pumping capacity of the first pump equals the predetermined desired total pumping capacity, whereas the current pumping capacity of the second pump is zero. Further, in a second time period, the current pumping capacity of the second pump equals the predetermined desired total pumping capacity, whereas the current pumping capacity of the first pump is zero.

The offshore wind turbine is an apparatus to convert the wind's kinetic energy into electrical energy. The wind turbine comprises, for example, a rotor having one or more blades connected each to a hub, a nacelle including the generator, and a tower holding, at its top end, the nacelle. The tower of the wind turbine may be connected via a transition piece to a foundation of the wind turbine such as a monopile in the seabed.

The wind turbine is an offshore wind turbine. Offshore includes marine environments as well as lakes and other open waters. The open water reservoir is, for example, a natural or artificial water volume. The open water reservoir is, for example, a standing (i.e. stagnant) or flowing water volume. The open water reservoir is, for example, an inland open water reservoir.

The hydrogen production apparatus is, in particular, configured for producing hydrogen gas by converting water into hydrogen by means of electrical energy generated by the generator of the wind turbine. For example, water is separated into hydrogen and oxygen by an electrolysis process in the hydrogen production apparatus, e.g., an electrolysis unit of the hydrogen production apparatus.

The hydrogen production apparatus comprises, for example, one or more electrolysis units for producing hydrogen gas, one or more compressor units for compressing the produced hydrogen gas, one or more hydrogen tanks for storing the produced hydrogen gas and/or one or more cooling units for cooling components of the hydrogen production apparatus.

The water-intake apparatus is an essential part of an offshore wind turbine including its own hydrogen production apparatus. Water supplied by the water-intake apparatus to the hydrogen production apparatus can be used for said electrolysis process. In particular, water supplied by the water-intake apparatus to the hydrogen production apparatus can be used in an electrolysis unit of the hydrogen production apparatus for converting water into hydrogen. Furthermore, water supplied by the water-intake apparatus to the hydrogen production apparatus can also be used for cooling purposes of components of the hydrogen production apparatus.

The water-intake apparatus is, in particular, a water-intake and supply apparatus.

The water-intake apparatus comprises, for example, one or more caissons (e.g., at least partly submersed caissons) for accommodating the first and/or the second pump. The water-intake apparatus comprises, for example, one or more pipes for transporting the water from an inlet (e.g., submersed inlet) of the pipe(s) to an outlet (e.g., an outlet at an outside platform of the wind turbine) of the pipe(s). The first and/or second pump may be arranged at the inlet of the one or more pipes or at the outlet of the one or more pipes. Each pipe comprises, for example, a riser. The water-intake apparatus may also comprise more than two pumps.

In particular, the water-intake apparatus comprises, for example, one pipe with an inlet and an outlet. Further, the first pump is, for example, arranged at the inlet of the pipe and the second pump is, for example, arranged at the outlet of the same pipe.

Alternatively, the water-intake apparatus comprises, for example, a first and a second pipe each with an inlet and an outlet. Further, the first pump is, for example, arranged at the inlet or the outlet of the first pipe. Moreover, the second pump is, for example, arranged at the inlet or the outlet of the second pipe.

Furthermore, the water-intake apparatus comprises, for example, one or more grills for filtering fishes, crabs, waste etc. The water-intake apparatus comprises, for example, one or more fine filters for filtering small particles. A fine filter is, for example, a microfilter preventing the passage of particles with a size of 500 µm or less, 300 µm or less, 100 µm or less, 50 µm or less and/or 10 µm or less.

In case that the water-intake apparatus comprises more than one pipe, each pipe may comprise a caisson, one or more grills, and/or one or more fine filters.

The first and second pumps are both pumps configured for delivering a variable pumping capacity. Hence, the first and second pumping capacities of the first and second pumps, respectively, can be set based on a control scheme for operating the pumps.

The pumping capacity of the first and second pumps is, in particular, the pumped volume (i.e. delivered volume) of water of the first and second pumps, respectively. The rated pumping capacity of the first and second pumps is, in particular, a manufacturer specification of the respective pump. The current pumping capacity of the first and second pumps is, in particular, a pumping capacity delivered currently by the respective pump.

Each of the first and second rated pumping capacities has, for example, a value in the range of 10 m³/hr and 500 m³/hr, 10 m³/hr and 100 m³/hr, 100 m³/hr and 200 m³/hr, 200 m³/hr and 300 m³/hr, 300 m³/hr and 400 m³/hr and/or 400 m³/hr and 500 m³/hr .

The predetermined desired total pumping capacity is, in particular, a predetermined desired total pumping capacity currently required by the hydrogen production apparatus. The predetermined desired total pumping capacity is, in particular, equal to or smaller than a maximum total pumping capacity required by the hydrogen production apparatus. The maximum total pumping capacity required by the hydrogen production apparatus is, for example, a pumping capacity required by the hydrogen production apparatus in a case in which the hydrogen production apparatus runs at maximum efficiency. The desired total pumping capacity can, for example, vary depending on the current efficiency of the hydrogen production apparatus. For example, during high-wind conditions, the hydrogen production apparatus may run at a larger efficiency compared to a case of low wind conditions. Hence, during high-wind conditions, the predetermined desired total pumping capacity is, for example, larger than during low wind conditions. The desired total pumping capacity is, for example, determined by the control device of the wind turbine based on feedback received by the hydrogen production apparatus and/or a desalination unit of the water-intake apparatus.

The control device is configured for controlling the first and second pumps such that both the first and second current pumping capacities are non-zero and the sum of the first and second current pumping capacities is equal to or larger than the desired total pumping capacity, and/or such that each of the first and second pumps alternatingly deliver the predetermined desired total pumping capacity. Here, the term "and/or" means that the control device is capable of performing both control strategies. However, at a specific time only one of the two control strategies is performed.

According to an embodiment, the control device is configured for controlling the first and second pumps such that each of the first and second pumps alternatingly deliver the predetermined desired total pumping capacity in alternating first and second time periods, respectively. Furthermore, each of the first and second time periods is 30 days or less, 20 days or less, 10 days or less, 5 days or less, 2 days or less, 1 day or less, 12 hours or less and/or 6 hours or less.

This embodiment refers to the second operational mode. By swapping in the second operational mode frequently which one of the first and second pumps is active (i.e. operating and pumping water) and which one is inactive (i.e. not pumping water, current pumping capacity of zero), the idle times for each pump can be kept small. Hence, the risk of mechanical failures of the pumps is further reduced. Thus, the availability of the water-intake apparatus is increased.

The first time period is, for example, equal to the second time period.

According to a further embodiment, the water-intake apparatus comprises a detection unit and/or one or more pressure sensors for detecting a failure of the first and/or the second pump. In addition, the control device is configured for controlling the first and second pumps such that, when a failure of one of the first and second pumps is detected, the water is pumped by means of the other one of the first and second pumps such that the current pumping capacity of the other one of the first and second pumps is equal to the desired total pumping capacity.

Thus, in a case of a failure of one of the first and second pumps, the other one of the first and second pumps is ready for operation since it was already in use according to the first and/or second operational mode.

According to a further embodiment, both the first and second pumps are submersible pumps, or one of the first and second pumps is a submersible pump and the other one of the first and second pumps is a self-priming pump.

A submersible pump is immersed into water (e.g., seawater), for example through a caisson, and advantageously has no risk of an air lock (in contrast to a self-priming pump). Further, also a submersible pump without a caisson may be provided.

The submersible pump is, for example, a flow pump. The submersible pump is, for example, a centrifugal pump, an axial-flow pump, a radial pump or the like.

The submersible pump is, for example, designed for pumping with its motor and pumping unit both immersed in water, e.g., seawater. Further, a control of the submersible pump is, for example, activated by float switches. The submersible pump is, for example, immersed into the water (e.g., seawater) such that it will be kept cool by the water.

The self-priming pump is, for example, a positive displacement pump.

The self-priming pump is, for example, a surface-mounted pump which draws water from below (e.g., up to 8 meters) without the need for a non-return valve. The self-priming pump is usually kept outside the water. The self-priming pump is, for example, accommodated within a structure such as pump housing. With a self-priming pump, the number of parts coming into contact with water is far less than for the submersed pump. Hence, wear of cable glands leading to leaking of water which can cause the complete pump to fail can be avoided with self-priming pumps. Further, a surface mounted self-priming pump can be easier maintained. Moreover, as the pump is not submersed in water it is subject to less harsh conditions in comparison with the submersed pump. In particular, a self-priming pump usually has to be replaced less often (e.g., four times less often) than a submersible pump.

The submersible pump and/or the self-priming pump is/are, for example, driven electrically, hydraulically or via an engine.

The water-intake apparatus comprises, for example, a single pipe with an inlet and an outlet and a caisson arranged at the inlet. Further, a submersible pump is, for example, arranged at the inlet of the pipe, e.g., accommodated in the caisson. Furthermore, a self-priming pipe is, for example, arranged at the outlet of the same pipe.

Alternatively, the water-intake apparatus comprises, for example, a first and a second pipe each with an inlet and an outlet. Further, in the case of the first and second pumps being both submersible pump, the first submersible pump is, for example, arranged at the inlet of the first pipe and the second submersible pump is, for example, arranged at the inlet of the second pipe. In the case of one submersible pump and one self-priming pump, the submersible pump is, for example, arranged at the inlet of the first pipe and the self-priming pump is, for example, arranged at the outlet of the second pipe.

In embodiments, both the first and second pumps are self-priming pumps.

According to a further embodiment, the water-intake apparatus comprises at least one pipe for transporting water. Further, the at least one pipe comprises an inlet for taking in water from the sea and/or the open water reservoir and an outlet for supplying the water to the hydrogen production apparatus, the outlet being arranged at a platform of the wind turbine. Moreover, one of the first and second pumps is arranged at the inlet of the pipe and the other one of the first and second pumps is arranged at the outlet of the pipe and/or on the platform.

According to a further embodiment, the water-intake apparatus comprises a first and a second filter unit for filtering water with a predetermined desired total filtering capacity and supplying the filtered water to the hydrogen production apparatus and/or to a desalination unit of the water-intake apparatus. The first and second filter units have first and second rated filtering capacities and first and second current filtering capacities, respectively, wherein both the first and second rated filtering capacities are equal to or larger than the desired total filtering capacity. Furthermore, the control device is configured for controlling the first and second filter units such that both the first and second current filtering capacities are non-zero and their sum is equal to the desired total filtering capacity.

Thus, both of the first and second filter units are capable of delivering the entire required filtering capacity. Further, idle times of both filter units are avoided. Hence, in the case of failure of one of the filter units, the other filter unit can overtake the entire load of filtering.

According to a further embodiment, the water-intake apparatus comprises a detection unit and/or one or more pressure sensors for detecting a failure of the first and/or the second filter unit. Furthermore, the control device is configured for controlling the first and second filter units such that, when a failure of one of the first and second filter units is detected, the water is pumped by means of the other one of the first and second filter units such that the current filtering capacity of the other one of the first and second filter units is equal to the desired total filtering capacity.

The one or more pressure sensors are, for example, arranged inside pipes of the water-intake apparatus and/or the hydrogen production apparatus. A pressure drop detected by the one or more pressure sensors may be an indication of a failure of the first and/or second pump.

According to a further embodiment, the offshore wind turbine comprises a tower and a platform arranged at an outer wall of the tower, wherein the hydrogen production apparatus is arranged on the platform.

Having the hydrogen production apparatus arranged on the outside platform of the tower of the wind turbine provides a decentralized offshore hydrogen production turbine producing offshore green hydrogen on a decentralized platform level.

According to a further embodiment, the hydrogen production apparatus comprises at least one electrolysis unit for converting water into hydrogen. Further, the water-intake apparatus is fluidly connected with the at least one electrolysis unit for supplying water to the at least one electrolysis unit for converting the supplied water into hydrogen.

Thus, the water supplied by the water-intake apparatus is used as starting product for production of hydrogen.

According to a further embodiment, the hydrogen production apparatus comprises one or more cooled components and at least one cooling unit for cooling the one or more cooled components by means of a cooling liquid. In addition, the water-intake apparatus is fluidly connected with the at least one cooling unit for supplying water as the cooling liquid to the at least one cooling unit.

Thus, the water supplied by the water-intake apparatus is used - in addition to or instead of as starting product for hydrogen production - as a cooling liquid for cooling components of the hydrogen production apparatus.

The one or more cooled components of the hydrogen production apparatus include, for example, one or more electrolysis units, one or more compressor units, and/or the produced (and optionally compressed) hydrogen gas.

The cooling unit includes, for example, a heat exchanger.

According to a further embodiment,
the water-intake apparatus comprises a desalination unit for desalinating water and supplying the desalinated water to the hydrogen production apparatus, and
the desalination unit is fluidly connected with an electrolysis unit of the hydrogen production apparatus for supplying the desalinated water to the electrolysis unit for converting the desalinated water into hydrogen, and/or
the desalination unit is fluidly connected with a cooling unit of the hydrogen production apparatus for supplying the desalinated water to the cooling unit as a cooling liquid.

Having the desalination unit allows to desalinate seawater and use it as starting product for hydrogen production and/or as a cooling liquid.

According to a further aspect, a method for operating an offshore wind turbine is provided. The offshore wind turbine comprises a water-intake apparatus with a first and a second pump and a hydrogen production apparatus fluidly connected to the water-intake apparatus. The first and second pumps have first and second rated pumping capacities and first and second current pumping capacities, respectively. Furthermore, the method comprises:
a) generating a control signal for controlling the first and second pumps such that:
   the first and second pumps pump water from the sea and/or an open water reservoir with a predetermined desired total pumping capacity to the hydrogen production apparatus, the desired total pumping capacity being equal to or smaller than both the first and second rated pumping capacities, and
   both the first and second current pumping capacities are non-zero and their sum is equal to or larger than the desired total pumping capacity, and/or
   each of the first and second pumps alternatingly deliver the predetermined desired total pumping capacity, and
b) controlling the first and second pumps based on the generated control signal.

According to an embodiment of the further aspect,the method comprises:
receiving flow-related data from a detection unit and/or from one or more pressure sensors of the water-intake apparatus and/or the hydrogen production apparatus,
detecting a failure of one of the first and second pumps based on the received flow-related data, and
generating a further control signal for controlling the first and second pumps such that the water is pumped by means of the other one of the first and second pumps, and the current pumping capacity of the other one of the first and second pumps is equal to the desired total pumping capacity.

The flow-related data include, for example, a pressure and/or flow velocity of the water in one or more pipes of the water-intake apparatus and/or the hydrogen production apparatus.

The respective entity, e.g., the control device and the control units described above and/or below, may be implemented in hardware and/or in software. If said entity is implemented in hardware, it may be embodied as a device, e.g., as a computer or as a processor or as a part of a system, e.g., a computer system. If said entity is implemented in software it may be embodied as a computer program product, as a function, as a routine, as a program code or as an executable object.

According to a further aspect, the invention relates to a computer program product comprising a program code for executing the above-described method for operating an offshore wind turbine when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

The embodiments and features described with reference to the apparatus of the present invention apply mutatis mutandis to the method of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows an offshore wind turbine according to an embodiment;
Fig. 2 illustrates a first operational mode of pumps of a water-intake apparatus of the wind turbine of Fig. 1;
Fig. 3 illustrates a second operational mode of pumps of a water-intake apparatus of the wind turbine of Fig. 1;
Fig. 4 shows a hydrogen production apparatus and a water-intake apparatus of the wind turbine of Fig. 1 according to another embodiment;
Fig. 5 illustrates an operation of filter units of the water-intake apparatus of Fig. 4;
Fig. 6 shows a hydrogen production apparatus and a water-intake apparatus of the wind turbine of Fig. 1 according to another embodiment;
Fig. 7 shows a hydrogen production apparatus and a water-intake apparatus of the wind turbine of Fig. 1 according to another embodiment;
Fig. 8 shows a flowchart illustrating a method for operating an offshore wind turbine according to an embodiment; and
Fig. 9 shows functional components of a control device of the wind turbine of Fig. 1, 4, 6 or 7.

In the Figures, like reference numerals designate like or functionally equivalent elements, unless otherwise indicated.

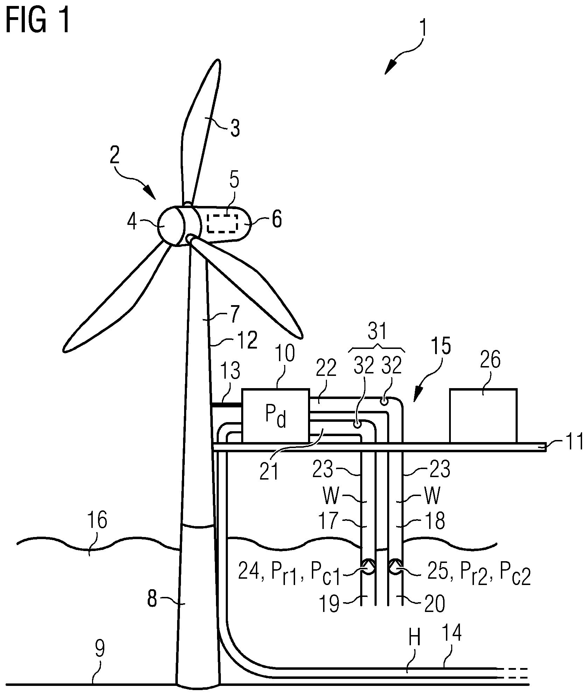

Fig. 1 shows an offshore wind turbine 1 according to an embodiment. The wind turbine 1 comprises a rotor 2 having one or more blades 3 connected to a hub 4. The hub 4 is connected via a rotation shaft (not shown) to a generator 5 arranged inside a nacelle 6. During operation of the wind turbine 1, the blades 3 are driven by wind to rotate and the wind's kinetic energy is converted into electrical energy by the generator 5 in the nacelle 6. The nacelle 6 is arranged at the upper end of a tower 7 of the wind turbine 1. The tower 7 is erected on a foundation 8 such as a monopile driven into a seabed 9.

The wind turbine 1 further comprises a hydrogen production apparatus 10 for converting the electrical energy generated by the generator 5 into hydrogen gas H. The hydrogen production apparatus 10 is, in particular, arranged on an outside platform 11 of the wind turbine tower 7. The platform 11 is, for example, arranged at (e.g., attached to) an outer wall 12 of the tower 7.

The wind turbine 1 comprises, for example, an electrical cable 13 for transporting electrical current generated by the generator 5 to the hydrogen production apparatus 10. The wind turbine 1 further comprises, for example, a transportation pipe 14 for transporting the produced hydrogen gas H to another offshore or onshore installation (not shown), e.g., a consumer.

The wind turbine 1 further comprises a water-intake apparatus 15 for taking in water W from the sea 16 and/or from an open water reservoir (not shown). An example for an open water reservoir is a lake or another natural open water situated inland.

The water-intake apparatus 15 includes at least one pipe 17, 18 with an inlet 19, 20 for taking in water W from the sea 16 and/or the open water reservoir. Further, the at least one pipe 17, 18 includes an outlet 21, 22 fluidly connected with the hydrogen production apparatus 10. The water-intake apparatus 15 is configured for supplying water W, e.g., from the sea 16, to the hydrogen production apparatus 10. The supplied water W may be used for production of hydrogen H and/or for cooling purposes. The at least one pipe 17, 18 includes, for example, a riser 23.

The water-intake apparatus 15 furthermore includes a first pump 24 and a second pump 25 for pumping water W, e.g., from the sea 16, to the hydrogen production apparatus 10. The water-intake apparatus 15 includes, for example, at least one caisson (not shown) for accommodating the first pump 24 and/or the second pump 25.

In the example of Fig. 1, the water-intake apparatus 15 includes two pipes 17, 18 (a first pipe 17 and a second pipe 18). Further, the first pump 24 is arranged at the inlet 19 of the first pipe 17 and the second pump 25 is arranged at the inlet 20 of the second pipe 18. In particular, in the example of Fig. 1, both the first and second pumps 24, 25 are submersed pumps.

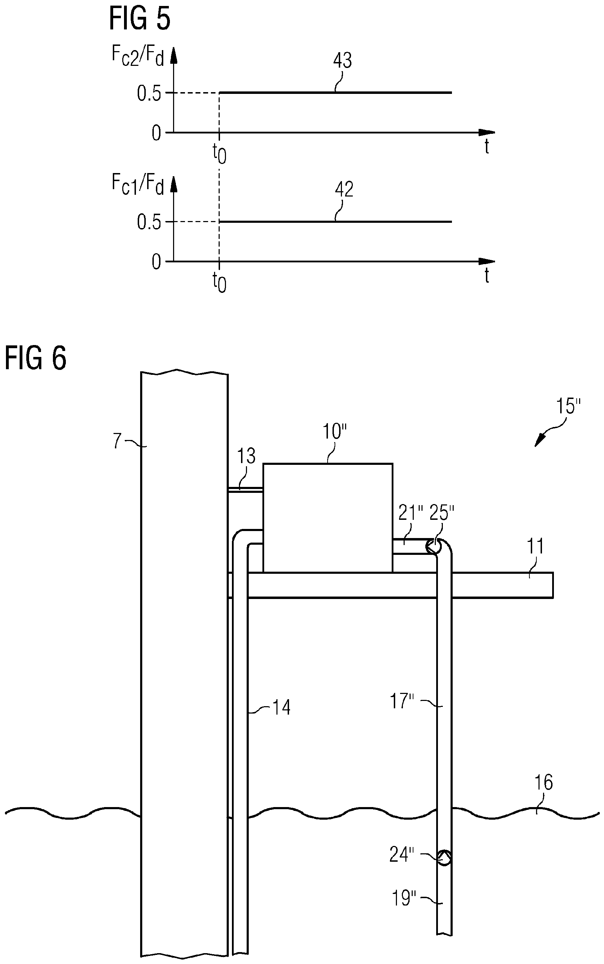

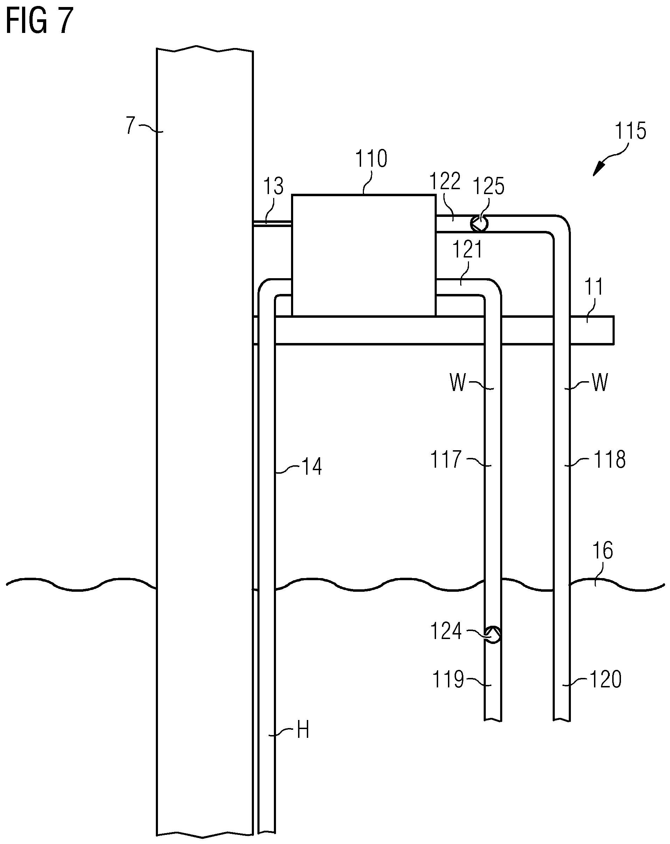

However, in other examples, one or both of the first and second pumps 24, 25 may also be arranged at the outlet 21, 22 of the respective pipe 17, 18 (Figs. 6, 7). For example, one or both of the first and second pumps 24, 25 may also be self-priming pumps.

Moreover, the water-intake apparatus 15 may also include only a single pipe 17 and one of the first and second pumps 24 may be arranged at the inlet 19 of said pipe 17 and the other one of the first and second pumps 24 may be arranged at the outlet 21 of said pipe 17 (Fig. 6)

The first pump 24 has a first rated pumping capacity Pᵣ₁ and the second pump 25 has a second rated pumping capacity Pᵣ₂, as indicated in Fig. 1. Each of the first and second rated pumping capacities Pᵣ₁, Pᵣ₂ has, for example, a value in the range of 10 m³/hr and 500 m³/hr, 10 m³/hr and 100 m³/hr, 100 m³/hr and 200 m³/hr, 200 m³/hr and 300 m³/hr, 300 m³/hr and 400 m³/hr and/or 400 m³/hr and 500 m³/hr.

Both the first rated pumping capacity Pᵣ₁ and the second rated pumping capacity Pᵣ₂ are equal to or larger than a predetermined desired total pumping capacity P_{d} of the hydrogen production apparatus 10. Hence, each one of the first and the second pumps 24, 25 is capable to deliver the desired total pumping capacity P_{d} of the hydrogen production apparatus 10.

Furthermore, a first current pumping capacity of the first pump 24 is denoted with the reference sign P_{c1}, and a second current pumping capacity of the second pump 25 is denoted with the reference sign P_{c2}.

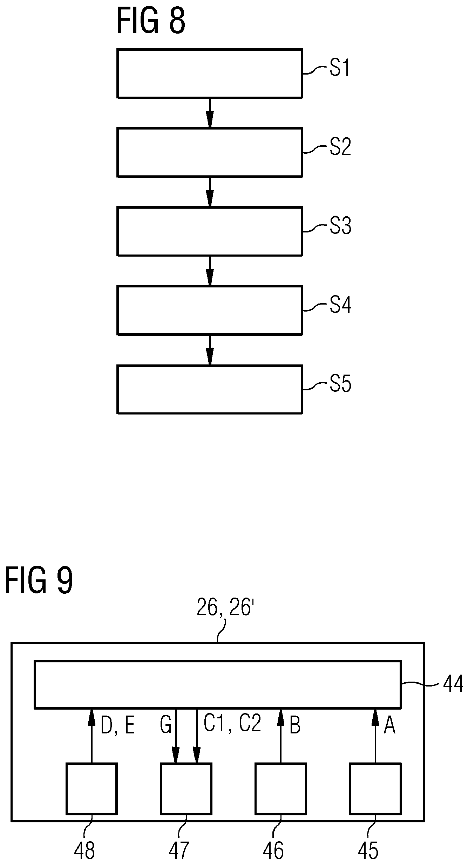

The wind turbine 1 further includes a control device 26 for controlling the first and second pumps 24, 25. The control device 26 is shown in Fig. 1 only schematically and exemplarily arranged on the platform 11. However, the control device 26 may be arranged on another outside or inside platform (not shown) of the tower 7, in the nacelle 6, or remote from the wind turbine 1 and/or be implemented in software (see also Fig. 9).

The control device 26 is configured for controlling the first and second pumps 24, 25 such that none of them is idle for a long time. Therefore, the risk of mechanical failures of the pumps 24, 25 is reduced and the availability of the water-intake apparatus 15 is increased.

In a first operational mode M1, the control device 26 is configured for controlling the first and second pumps 24, 25 such that both the first current pumping capacity P_{c1} and the second current pumping capacity P_{c2} are non-zero. In addition, the control device 26 is configured for controlling the first and second pumps 24, 25 such that the sum of the first current pumping capacity P_{c1} and the second current pumping capacity P_{c2} is equal to or larger than the desired total pumping capacity P_{d}. Thus, the desired total pumping capacity P_{d} required by the hydrogen production apparatus 10 is delivered by the first and second pumps 24, 25 together such that it is split between the first and second pumps 24, 25 based on a predetermined ratio. In the first operational mode M1, none of the first and second pumps 24, 24 has an idle time.

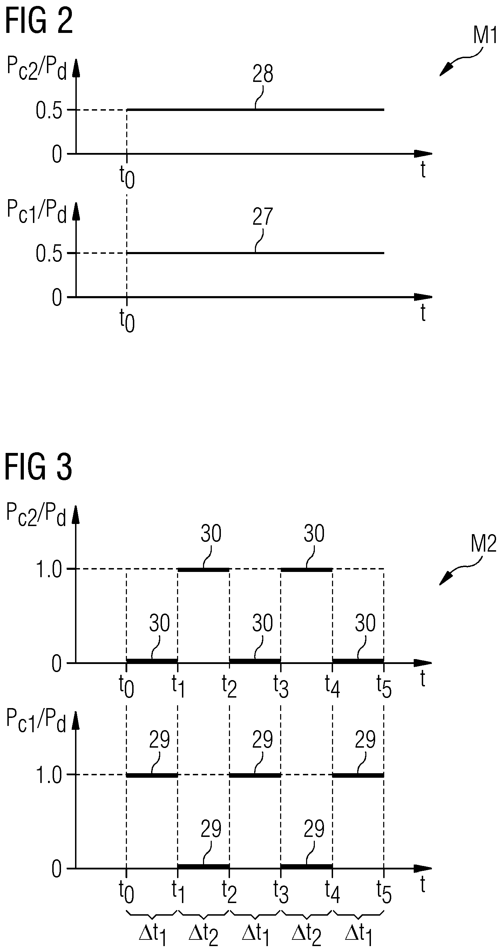

Fig. 2 illustrates the first operational mode M1. In Fig. 2, the timely evolution 27, 28 of the first current pumping capacity P_{c1} (bottom panel) and the second current pumping capacity P_{c2} (top panel) both in units of the desired total pumping capacity P_{d} are shown. The operation of the water-intake apparatus 15 starts a time t₀. Starting from time t₀, both pumps 24, 25 deliver simultaneously a fraction (e.g., 50%) of the desired total pumping capacity P_{d}, as shown by the graphs 27, 28 in Fig. 2.

In a second operational mode M2, the first and second pumps 24, 25 alternatingly deliver the predetermined desired total pumping capacity P_{d}.

Fig. 3 illustrates the second operational mode M2. In Fig. 3, the timely evolution 29, 30 of the first current pumping capacity P_{c1} (bottom panel) and the second current pumping capacity P_{c2} (top panel) both in units of the desired total pumping capacity P_{d} are shown. Reference sign 29 denotes a graph illustrating the first current pumping capacity P_{c1}. Further, reference sign 30 denotes a graph illustrating the second current pumping capacity P_{c2}. The operation of the water-intake apparatus 15 starts a time t₀. In a first time period Δt₁ from time t₀ to time t₁, the first pump 24 delivers 100% of the desired total pumping capacity P_{d} (i.e. P_{c1}=P_{d}). In the first time period Δt₁, the second pump is inactive (i.e. P_{c2}=0). Then, in a second time period Δt₂ from time t₁ to time t₂, the first pump 24 is inactive (P_{c1}=0) and the second pump 25 delivers 100% of the desired total pumping capacity P_{d} (i.e. P_{c2}=P_{d}). The first and second time periods Δt₁, Δt₂ are alternating, as shown in Fig. 3. A duration of the first and second time periods Δt₁, Δt₂ is, for example, 12 hours. However, the duration of the first and second time periods Δt₁, Δt₂ may also have another value of, for example, a few days or less than a day.

As shown in Fig. 1, the water-intake apparatus 15 may also comprise a detection unit 31 and/or one or more pressure sensors 32 for detecting a failure of the first and/or the second pump 24, 25. The one or more pressure sensors 32 are, for example, configured for measuring (e.g., monitoring) a pressure of the water W which is pumped through the pipe(s) 17, 18 of the water-intake apparatus. A pressure drop and/or reduced flow velocity of the water W may indicate a failure of one of the pumps 24, 25.

Furthermore, the control device 26 may be configured for controlling the first and second pumps 24, 25 such that, when a failure of one of the first and second pumps 24, 25 is detected, the water W is pumped by means of the other one of the first and second pumps 24, 25 such that the current pumping capacity P_{C1}, P_{c2} of the other one of the first and second pumps 24, 25 is equal to the desired total pumping capacity P_{d}. For example, when a failure of the second pump 25 is detected, the first and second pumps 24, 25 are controlled by the control device 26 such that the first pump 24 delivers the desired total pumping capacity P_{d} alone (i.e. P_{C1}=P_{d} and P_{C2}=0) .

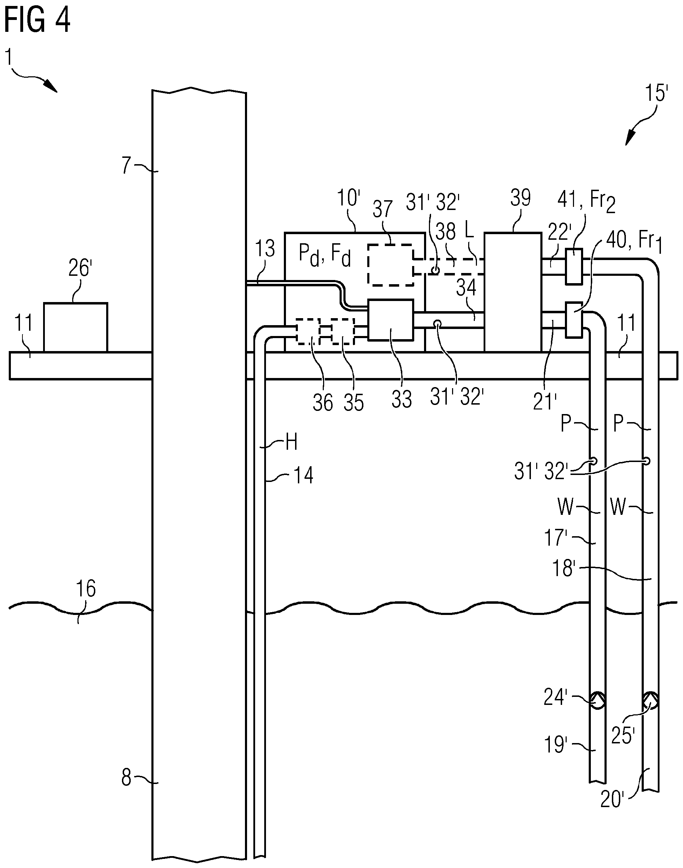

Fig. 4 shows a hydrogen production apparatus 10' and a water-intake apparatus 15' of the wind turbine 1 of Fig. 1 according to another embodiment.

The hydrogen production apparatus 10' in Fig. 4 is, similar as the hydrogen production apparatus 10 in Fig. 1, arranged on the outside platform 11 of the wind turbine tower 7.

The hydrogen production apparatus 10' in Fig. 4 includes at least one electrolysis unit 33 for converting water W into hydrogen gas H. The water-intake apparatus 15' is, for example, fluidly connected (e.g., by a pipe 34) with the at least one electrolysis unit 33 for supplying water W to the electrolysis unit 33. The electrolysis unit 33 converts the supplied water W into hydrogen gas H by a chemical process.

The hydrogen production apparatus 10' may further include at least one compressor unit 35 for compressing the produced hydrogen gas H. The hydrogen production apparatus 10' optionally includes one or more hydrogen tanks 36 for temporarily storing the produced hydrogen gas H.

As shown in Fig. 4, the hydrogen production apparatus 10' may optionally further include one or more cooling units 37 for cooling components (e.g., the electrolysis unit 33, the compressor unit 35, the hydrogen gas H in the tank 36 or the like) of the hydrogen production apparatus 10'. In this case, the water-intake apparatus 15' may, for example, be fluidly connected (e.g., with a pipe 38) with the one or more cooling units 37 for supplying water W as a cooling liquid L to the cooling unit 37. The cooling unit 37 is only schematically shown in Fig. 4. Although not shown, the cooling unit 37 may include a heat exchanger and/or be in thermal contact with the cooled components 33, 35, 36 of the hydrogen production apparatus 10' for heat exchange.

The water-intake apparatus 15' in Fig. 4 comprises, similar as the water-intake apparatus 15 in Fig. 1, at least one pipe 17', 18' with an inlet 19', 20' for taking in water W and an outlet 21', 22' fluidly connected with the hydrogen production apparatus 10'. Also in the example of Fig. 4, two pipes 17', 18' are provided. The water-intake apparatus 15' further includes a first and a second pump 24', 25' for pumping water W from the sea 16 to the hydrogen production apparatus 10'. The first and a second pumps 24', 25' are exemplarily shown in Fig. 4 to be arranged at the first and second pipes 17', 18', respectively. However, in other examples, both pumps 24', 25' may also be arranged at a single pipe 17' (Fig. 6).

The water-intake apparatus 15' may further comprises at least one desalination unit 39 for desalinating the water W pumped from the sea 16 to the hydrogen production apparatus 10'.

The at least one desalination unit 39 may be fluidly connected (pipe 34) with the at least one electrolysis unit 33 for converting the desalinated water W in the electrolysis unit 33 into hydrogen H. In addition or instead, the desalination unit 39 may be fluidly connected (pipe 38) with the at least one cooling unit 37 for using the desalinated water W as a cooling liquid L.

The water-intake apparatus 15' may further comprise, for example, at least one filter unit 40, 41 for filtering the water W before supplying the water W to the hydrogen production apparatus 10' and/or the desalination unit 39. The filter unit 40, 41 may be arranged next to the outlet 21', 22' of a respective pipe 17', 18', as shown in Fig. 4.

In the example of Fig. 4, two filter units 40, 41 are shown. The first and second filter units 40, 41 are, for example, configured for filtering water W with a predetermined desired total filtering capacity F_{d} and supplying the filtered water W to the hydrogen production apparatus 10' and/or to the desalination unit 39 of the water-intake apparatus 15'. The first and second filter units 40, 41 have, for example, first and second rated filtering capacities Fᵣ₁, Fᵣ₂, respectively. Further, the first and second filter units 40, 41 have, for example, first and second current filtering capacities F_{c1}, F_{c2}, respectively. Both the first and second rated filtering capacities Fᵣ₁, Fᵣ₂ are, for example, equal to or larger than the desired total filtering capacity P_{d}.

Moreover, the water-intake apparatus 15' and/or the hydrogen production apparatus 10' may, for example, include a detection unit 31' and/or one or more pressure sensors 32' for measuring a pressure P of the water W flowing through pipes 17', 18', 34, 38 and other components of said apparatuses 10', 15'.

Furthermore, a control device 26' is provided for controlling the first and second pumps 24', 25' according to the first and/or second operational mode M1, M2 (Figs. 2, 3).

The control device 26' may further be configured for controlling the first and second filter units 40, 41 such that both the first and second current filtering capacities F_{c1}, F_{c2} are non-zero and their sum is equal to the desired total filtering capacity F_{d}, as illustrated in Fig. 5. In Fig. 5, the timely evolution 42, 43 of the first and second current filtering capacities F_{c1}, F_{c2} in units of the desired total filtering capacity F_{d} are displayed. In the example of Fig. 5, both filtering units 40, 41 deliver 50% of the total filtering capacity F_{d} required by the hydrogen production apparatus 10' and/or the desalination unit 39.

When the detection unit 31' and/or the one or more pressure sensors 32' detect a failure of the first and/or the second filter unit 40, 41, the control device 26' may be configured for controlling the first and second filter units 40, 41 based on the detected failure. In particular, when for example a failure of the second filter unit 41 is detected, the control device 26' controls the filter units 40, 41 such that water W is pumped only by means of the first filter unit 40 such that the current filtering capacity F_{c1} of the first filter unit 40 is equal to the desired total filtering capacity F_{d}.

Fig. 6 shows a hydrogen production apparatus 10" and a water-intake apparatus 15" of the wind turbine 1 of Fig. 1 according to another embodiment. In the following, only difference to the hydrogen production apparatus 10, 10' and the water-intake apparatus 15, 15' of Figs. 1 and 4 are described.

The water-intake apparatus 15" in Fig. 6 comprises only a single pipe 17" for the intake of water W from the sea 16 or an open water reservoir. The pipe 17" comprises an inlet 19" for taking in water W and an outlet 21" for providing the water W to the hydrogen production apparatus 10". The water-intake apparatus 15" in Fig. 6 comprises two pumps 24", 25". The first pump 24" is a submersible pump arranged submersed (e.g., through a caisson, not shown) in the seawater 16. The first pump 24" is, in particular, arranged at the inlet 19" of the pipe 17". Further, the second pump 25" is a self-priming pump arranged on the platform 11. The second pump 25" is, in particular, arranged at the outlet 21" of the pipe 17". Although not shown in Fig. 6, a control device similar as the control device 26, 26' (Figs. 1, 4) is provided to control the pumps 24", 25".

Fig. 7 shows a hydrogen production apparatus 110 and a water-intake apparatus 115 of the wind turbine 1 of Fig. 1 according to another embodiment. In the following, only difference to the hydrogen production apparatus 10, 10', 10" and the water-intake apparatus 15, 15', 15" of Figs. 1, 4 and 6 are described.

The water-intake apparatus 115 in Fig. 7 comprises two pipes pipe 117, 118 for the intake of water W from the sea 16 or an open water reservoir. Each pipe 117, 118 comprises an inlet 119, 120 for taking in water W and an outlet 121, 122 for providing the water W to the hydrogen production apparatus 110. The water-intake apparatus 115 in Fig. 7 comprises two pumps 124, 125. The first pump 124 is a submersible pump arranged submersed (e.g., through a caisson, not shown) in the seawater 16. The first pump 124 is, in particular, arranged at the inlet 119 of the first pipe 117. Further, the second pump 125 is a self-priming pump arranged on the platform 11. The second pump 125 is, in particular, arranged at the outlet 122 of the second pipe 117. Although not shown in Fig. 7, a control device similar as the control device 26, 26' (Figs. 1, 4) is provided to control the pumps 124, 125.

In the following, a method for operating an offshore wind turbine 1 is described with reference to Fig. 8.

The offshore wind turbine 1 comprises a water-intake apparatus 15, 15', 15", 115 (Figs. 1, 4, 6, 7) with a first pump 24, 24', 24", 124 and a second pump 25, 25', 25", 125. Further, the offshore wind turbine 1 comprises a hydrogen production apparatus 10, 10', 10", 110 fluidly connected to the water-intake apparatus 15, 15', 15", 115.

The first pump 24, 24', 24", 124 has a first rated pumping capacity Pᵣ₁ and the second pump 25, 25', 25", 125 has a second rated pumping capacity Pᵣ₂ (Fig. 1), respectively. Furthermore, the first pump 24, 24', 24", 124 has a first current pumping capacity P_{C1} and the second pump 25, 25', 25", 125 has a second current pumping capacity P_{c2}, respectively. In the following, the method is described exemplarily for the first pump 24 and the second pump 25 (Fig. 1). However, the method may be equally applied to the first pumps 24', 24", 124 and the second pumps 25', 25", 125 (Figs. 4, 6, 7).

In a first step S1 of the method, a control signal C1, C2 (Fig. 9) is generated, e.g., by the control device 26, 26', for controlling the first and second pumps 24, 25 to deliver the predetermined desired total pumping capacity P_{d}. The control signal C1, C2 is, in particular, generated such that the first and second pumps 24, 25 pump water W from the sea 16 and/or an open water reservoir (not shown) with a predetermined desired total pumping capacity P_{d} to the hydrogen production apparatus 10. The desired total pumping capacity P_{d} is, in particular, equal to or smaller than both the first and second rated pumping capacities Pᵣ₁ Pᵣ₂.

Furthermore, the control signal C1, C2 is generated according to either a first operational mode M1 or a second operational mode M2 (Figs. 2, 3). In the first operational mode M1, the control signal C1 is generated such that both the first and second current pumping capacities P_{c1} P_{c2} are non-zero and such that their sum is equal to or larger than the desired total pumping capacity P_{d} (Fig. 2). In the second operational mode M2, the control signal C2 is generated such that each of the first and second pumps 24, 25 alternatingly deliver the predetermined desired total pumping capacity P_{d}.

In a second step S2 of the method, the first and second pumps 24, 25 are controlled based on the generated control signal C1, C2.

In a third step S3 of the method, flow-related data D (Fig. 9) are received from a detection unit 31 and/or from one or more pressure sensors 32 of the water-intake apparatus 15 (Fig. 1).

In a fourth step S4 of the method, a failure E of one of the first and second pumps 24, 25 (e.g., of the second pump 25) is detected based on the received flow-related data D.

In a fifth step S5 of the method, a further control signal G is generated for controlling the first and second pumps 24, 25 such that the water W is pumped by means of the other one (e.g., the first pump 24) of the first and second pumps 24, 25 with its current pumping capacity P_{c1}, P_{c2} being equal to the desired total pumping capacity P_{d}.

Since the first and second pumps 24 25 have been controlled in step S2 according to the first or second operational mode M1, M2, long idle times of the pumps 24, 25 during normal operation (i.e. without a failure of one of the pumps 24, 25) are avoided. Furthermore, in the case of a failure of one of the pumps 24, 25, the other pump is already in operation mode and can overtake and deliver the entire required pumping capacity P_{d} alone. Thus, the availability of the water-intake apparatus 15 can be better guaranteed. Hence, the hydrogen production apparatus 10 - for which the delivered water W is a pre-requisite for hydrogen production and/or cooling - can continue operating even in the case of a failure of one of the pumps 24, 25.

Fig. 9 illustrates functional components of the control device 26, 26' (Figs. 1, 4) of the wind turbine 1. The control device 26, 26' includes, for example, a main control unit 44, an electrolysis control unit 45, a desalination control unit 46, a pump control unit 47, and/or a detection control unit 48.

The electrolysis control unit 45 and/or the desalination control unit 46 may send a water demand control signal A, B to the main control unit 44. The water demand control signal A, B indicates a desired total pumping capacity P_{d} required by the at least one electrolysis unit 33 and/or the at least one desalination unit 39 (Fig. 4).

The main control unit 44 generates a control signal C1, C2 for controlling the first and second pumps 24, 25 based on the predetermined desired total pumping capacity P_{d}. In particular, the main control unit 44 generates the control signal C1, C2 to deliver the predetermined desired total pumping capacity P_{d} according to the first or the second operational mode M1, M2 (Figs. 2, 3). Further, the main control unit 44 sends the generated control signal C1, C2 to the pump control unit 47.

Further, the main control unit 44 receives flow-related data D from the detection unit 31 and/or from the one or more pressure sensors 32 of the water-intake apparatus 15. Then, the main control unit 44 may detect a failure E of one of the first and second pumps 24, 25 (e.g., of the second pump 25) based on the received flow-related data D. When a failure E of one of the pumps 24, 25 is detected, the main control unit 44
generates a control signal G and sends the control signal G to the pump control unit 47 for controlling the first and second pumps 24, 25 such that the water W is pumped by means of the other one (e.g., the first pump 24) of the first and second pumps 24, 25 with its current pumping capacity P_{c1}, P_{c2} being equal to the desired total pumping capacity P_{d}.

Although the present invention has been described in accordance with preferred embodiments, it is obvious for the person skilled in the art that modifications are possible in all embodiments.

## Claims

1. An offshore wind turbine (1), comprising:
a generator (5) for generating electrical power from wind power,
a hydrogen production apparatus (10) for converting water (W) into hydrogen (H) by means of the generated electrical power,
a water-intake apparatus (15) comprising a first and a second pump (24, 25) for taking in water (W) from the sea (16) and/or an open water reservoir and pumping the water (W) to the hydrogen production apparatus (10) with a predetermined desired total pumping capacity (P_{d}), the first and second pumps (24, 25) having first and second rated pumping capacities (Pᵣ₁, Pᵣ₂) and first and second current pumping capacities (P_{c1}, P_{c2}), respectively, and both the first and second rated pumping capacities (Pᵣ₁, Pᵣ₂) being equal to or larger than the desired total pumping capacity (P_{d}), and
a control device (26) for controlling the first and second pumps (24, 25) such that:
both the first and second current pumping capacities (P_{c1}, P_{c2}) are non-zero and their sum is equal to or larger than the desired total pumping capacity (P_{d}), and/or
the first and second pumps (24, 25) alternatingly deliver the predetermined desired total pumping capacity (P_{d}) .

2. The offshore wind turbine according to claim 1, wherein:
the control device (26) is configured for controlling the first and second pumps (24, 25) such that each of the first and second pumps (24, 25) alternatingly deliver the predetermined desired total pumping capacity (P_{d}) in alternating first and second time periods (Δt₁, Δt₂), respectively, and
each of the first and second time periods (Δt₁, Δt₂) is 30 days or less, 20 days or less, 10 days or less, 5 days or less, 2 days or less, 1 day or less, 12 hours or less and/or 6 hours or less.

3. The offshore wind turbine according to claim 1 or 2, wherein:
the water-intake apparatus (15) comprises a detection unit (31) and/or one or more pressure sensors (32) for detecting a failure (E) of the first and/or the second pump (24, 25), and
the control device (26) is configured for controlling the first and second pumps (24, 25) such that, when a failure (E) of one of the first and second pumps (24, 25) is detected, the water (W) is pumped by means of the other one of the first and second pumps (24, 25) such that the current pumping capacity (P_{c1}, P_{c2}) of the other one of the first and second pumps (24, 25) is equal to the desired total pumping capacity (P_{d}).

4. The offshore wind turbine according to one of claims 1 - 3, wherein both the first and second pumps (24, 25) are submersible pumps (24, 25), or one of the first and second pumps (124, 125) is a submersible pump (124) and the other one of the first and second pumps (124, 125) is a self-priming pump (125) .

5. The offshore wind turbine according to one of claims 1 - 4, wherein:
the water-intake apparatus (15) comprises at least one pipe (17, 18) for transporting water (W),
the at least one pipe (17, 18) comprises an inlet (19, 20) for taking in water (W) from the sea (16) and/or the open water reservoir and an outlet (21, 22) for supplying the water (W) to the hydrogen production apparatus (10), the outlet (21, 22) being arranged at a platform (11) of the wind turbine (1), and
one of the first and second pumps (24, 25) is arranged at the inlet (19, 20) of the at least one pipe (17, 18) and the other one of the first and second pumps (24, 25) is arranged at the outlet (21, 22) of the at least one pipe (17, 18) and/or on the platform (11).

6. The offshore wind turbine according to one of claims 1 - 5, wherein:
the water-intake apparatus (15') comprises a first and a second filter unit (40, 41) for filtering water (W) with a predetermined desired total filtering capacity (F_{d}) and supplying the filtered water (W) to the hydrogen production apparatus (10') and/or to a desalination unit (39) of the water-intake apparatus (15'),
the first and second filter units (40, 41) have first and second rated filtering capacities (Fᵣ₁, Fᵣ₂) and first and second current filtering capacities (F_{c1}, F_{c2}), respectively, wherein both the first and second rated filtering capacities (Fᵣ₁, Fᵣ₂) are equal to or larger than the desired total filtering capacity (F_{d}), and
the control device (26') is configured for controlling the first and second filter units (40, 41) such that both the first and second current filtering capacities (F_{c1}, F_{c2}) are non-zero and their sum is equal to the desired total filtering capacity (F_{d}).

7. The offshore wind turbine according to claim 6, wherein the water-intake apparatus (15') comprises a detection unit (31') and/or one or more pressure sensors (32') for detecting a failure of the first and/or the second filter unit (40, 41), and
the control device (26') is configured for controlling the first and second filter units (40, 41) such that, when a failure of one of the first and second filter units (40, 41) is detected, the water (W) is pumped by means of the other one of the first and second filter units (40, 41) such that the current filtering capacity (F_{c1}, F_{c2}) of the other one of the first and second filter units (40, 41) is equal to the desired total filtering capacity (F_{d}).

8. The offshore wind turbine according to one of claims 1 - 7, comprising a tower (7) and a platform (11) arranged at an outer wall (12) of the tower (7), wherein the hydrogen production apparatus (10) is arranged on the platform (11).

9. The offshore wind turbine according to one of claims 1 - 8, wherein:
the hydrogen production apparatus (10') comprises at least one electrolysis unit (33) for converting water (W) into hydrogen (H), and
the water-intake apparatus (15') is fluidly connected with the at least one electrolysis unit (33) for supplying water (W) to the at least one electrolysis unit (33) for converting the supplied water (W) into hydrogen (H).

10. The offshore wind turbine according to one of claims 1 - 9, wherein:
the hydrogen production apparatus (10') comprises one or more cooled components (33, 35, 36) and at least one cooling unit (37) for cooling the one or more cooled components (33, 35, 36) by means of a cooling liquid (L), and
the water-intake apparatus (15') is fluidly connected with the at least one cooling unit (37) for supplying water (W) as the cooling liquid (L) to the at least one cooling unit (37).

11. The offshore wind turbine according to one of claims 1 - 10, wherein:
the water-intake apparatus (15') comprises a desalination unit (39) for desalinating water (W) and supplying the desalinated water (W) to the hydrogen production apparatus (10'), and
the desalination unit (39) is fluidly connected with an electrolysis unit (33) of the hydrogen production apparatus (10') for supplying the desalinated water (W) to the electrolysis unit (33) for converting the desalinated water (W) into hydrogen (H), and/or
the desalination unit (39) is fluidly connected with a cooling unit (37) of the hydrogen production apparatus (10') for supplying the desalinated water (W) to the cooling unit (37) as a cooling liquid (L).

12. A method for operating an offshore wind turbine (1), the offshore wind turbine (1) comprising a water-intake apparatus (15) with a first and a second pump (24, 25) and a hydrogen production apparatus (10) fluidly connected to the water-intake apparatus (15), and the first and second pumps (24, 25) having first and second rated pumping capacities (Fᵣ₁, Fᵣ₂) and first and second current pumping capacities (F_{c1}, F_{c2}), respectively, wherein the method comprises:
a) generating (S1) a control signal (C1, C2) for controlling the first and second pumps (24, 25) such that:
the first and second pumps (24, 25) pump water (W) from the sea (16) and/or an open water reservoir with a predetermined desired total pumping capacity (P_{d}) to the hydrogen production apparatus (10), the desired total pumping capacity (P_{d}) being equal to or smaller than both the first and second rated pumping capacities (Fᵣ₁, Fᵣ₂), and
both the first and second current pumping capacities (F_{c1}, F_{c2}) are non-zero and their sum is equal to or larger than the desired total pumping capacity (P_{d}), and/or
each of the first and second pumps (24, 25) alternatingly deliver the predetermined desired total pumping capacity (P_{d}), and
b) controlling (S2) the first and second pumps (24, 25) based on the generated control signal (C1, C2).

13. The method according to claim 12, comprising:
receiving (S3) flow-related data (D) from a detection unit (31) and/or from one or more pressure sensors (32) of the water-intake apparatus (15) and/or the hydrogen production apparatus (10),
detecting a failure (E) of one of the first and second pumps (24, 25) based on the received flow-related data (D), and
generating a further control signal (G) for controlling the first and second pumps (24, 25) such that the water (W) is pumped by means of the other one of the first and second pumps (24, 25), and the current pumping capacity (P_{c1}, P_{c2}) of the other one of the first and second pumps (24, 25) is equal to the desired total pumping capacity (P_{d}).
